(19) **Europäisches Patentamt**
**European Patent Office**
**Office européen des brevets**

(11) **EP 2 538 739 A1**

(12) **EUROPEAN PATENT APPLICATION**
published in accordance with Art. 153(4) EPC

(43) Date of publication:
**26.12.2012 Bulletin 2012/52**

(51) Int Cl.:
***H04W 72/04*** *(2009.01)*

(21) Application number: **11761922.1**

(22) Date of filing: **17.01.2011**

(86) International application number:
**PCT/CN2011/070335**

(87) International publication number:
**WO 2011/120347 (06.10.2011 Gazette 2011/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2010 CN 201010155482**

(71) Applicant: **ZTE Corporation**
**Shenzhen, Guangdong 518057 (CN)**

(72) Inventors:
• **JIANG, Jing**
**Shenzhen**
**Guangdong 518057 (CN)**

• **WANG, Bin**
**Shenzhen**
**Guangdong 518057 (CN)**
• **LI, Yu Ngok**
**Shenzhen**
**Guangdong 518057 (CN)**

(74) Representative: **Lawal, Abdulmalik Adinoyi**
**Murgitroyd & Company**
**Scotland House**
**165-169 Scotland Street**
**Glasgow, Strathclyde G5 8PL (GB)**

(54) **METHOD AND DEVICE FOR TRANSMITTING CHANNEL MEASUREMENT PILOT INFORMATION**

(57) The present invention discloses a method for transmitting channel state indication reference signal information, and the method includes: a network side transmitting the channel state indication reference signal information of every other cell in a long-term coordinated set to a terminal, wherein the channel state indication reference signal information includes at least a transmission cycle of a channel state indication reference signal as well as quantity of ports of the channel state indication reference signal of the every other cell in the long-term coordinated set. The present invention also discloses an apparatus for transmitting channel state indication reference signal information, which is applied at a network side, and the apparatus includes a unit for transmitting the channel state indication reference signal information. The invention guarantees that any terminal within a cell can receive a channel state indication reference signal in a long-term coordinated set, which meets the requirement of channel measurement of the coordinated multiple point transmission, and guarantees that the reliability and extensiveness of the information communication with a less signaling overhead.

FIG. 3

**Description**

Technical Field

The present invention relates to the field of communications, and in particular, to a method and apparatus for transmitting channel state indication reference signal information.

Background of the Related Art

A Long Term Evolution-Advanced (LTE-A for short) system will support Coordinated Multiple Point Transmission and Reception (COMP for short). In the 56th meeting of the 3rd Generation Partnership Project (3GPP for short) Long-Term Evolution (LTE for short), two reference signals of the LTE-A system, i.e., a Channel State Indication Reference Signal (CSI-RS for short) and a Demodulation Reference Signal (DMRS for short), have been defined. Wherein, a channel state indication reference signal not only needs to support channel measurement of multiple antennas of the local cell, but also needs to support inter-cell CoMP measurement. In order to enhance the inter-cell CoMP measurement, many companies propose that when one cell in a coordinated set transmits a channel state indication reference signal, other cells do not transmit data at a corresponding location. Wherein, the long-term coordinated set refers to a cell set which needs to be considered for the orthogonal design of an inter-cell CSI-RS, and an Evolved NodeB (eNodeB for short) selects the long-term coordinated set according to a long-term interference statistic.

In order to reduce the performance degradation of the Rel 10 user by transmitting data at a location of a channel state indication reference signal of other cell, the User Equipment (UE for short) needs to know a transmission location, a transmission cycle, and antenna quantity of ports of every other cell in the long-term coordinated set.

At present, existing technologies do not propose corresponding schemes concerning the problem.

Summary of the Invention

The technical problem to be solved by the present invention is to provide a method and apparatus for transmitting channel state indication reference signal information, which notify the UE of channel state indication reference signal information of a cell in a long-term coordinated set through system information.

In order to solve the above problem, the present invention provides a method for transmitting channel state indication reference signal information, which comprises:

a network side transmitting the channel state indication reference signal information of every other cell in a long-term coordinated set to a terminal, wherein the channel state indication reference signal information includes at least a transmission cycle of a channel state indication reference signal as well as quantity of ports of the channel state indication reference signal of the every other cell in the long-term coordinated set.

Wherein, the network side transmits the channel state indication reference signal information to the terminal through system information of the cell or a Media Access Control Control Element (MAC CE) or a Radio Resource Control message (RRC message).

Wherein, the channel state indication reference signal information further comprises: a transmission location of the channel state indication reference signal and/or a cell identification (ID) of every other cell in the long-term coordinated set.

Wherein, the system information comprises: a Master Information Block (MIB), a System Information Block 1 (SIB1) or other SIBs.

Wherein, the network side transmits the channel state indication reference signal information in the system information of the cell in a differential manner.

Wherein, the transmission cycle of the channel state indication reference signal occupies 1-4 bits of the system information;

the quantity of ports of the channel state indication reference signal occupies 0-2 bits of the system information; and the transmission location of the channel state indication reference signal occupies 0-6 bits of the system information.

In order to solve the above problem, the present invention further provides an apparatus for transmitting channel state indication reference signal information, wherein, the apparatus is applied at a network side, and comprises: a channel state indication reference signal information transmitting unit; wherein, the channel state indication reference signal information transmitting unit is configured to transmit the channel state indication reference signal information of every other cell in a long-term coordinated set to a terminal, wherein the channel state indication reference signal information includes at least a transmission cycle of a channel state indication reference signal as well as quantity of ports of the channel state indication reference signal of the every other cell.

Wherein, the channel state indication reference signal information transmitting unit is configured to transmit the channel state indication reference signal information to the terminal through system information of the cell or a Media Access Control Control Element (MAC CE) or a Radio Resource Control message (RRC message).

Wherein, the channel state indication reference signal information transmitting unit is further configured to transmit the following channel state indication reference signal information: a transmission location of the channel state indication reference signal and/or a cell identification (ID) of every other cell in the long-term coordinated set.

Wherein, the channel state indication reference signal information transmitting unit is configured to transmit the channel state indication reference signal information in the system information of the cell in a differential manner; wherein, the system information of the cell comprises: a Master Information Block (MIB), a System Information Block 1 (SIB1) or other SIBs.

With the technical scheme of the present invention, the problem of lacking implementation method for notifying the UE of related information of the channel state indication reference signal of other cells in the long-term coordinated set in the related technologies is solved, thus ensuring that all the terminals in the cell can receive the channel state indication reference signal in the long-term coordinated set, which meets the requirement of channel measurement of the coordinated multiple point transmission, and the reliability and extensiveness of the information communication is guaranteed with a less signaling overhead.

Brief Description of Drawings

The accompanying drawings described here are used to provide further understanding of the present invention, and constitute a part of the present application. The schematic embodiments of the present invention and the description thereof are used to explain the present invention, and do not constitute improper definition on the present invention. In the accompanying drawings:

FIG. 1 is a diagram of a channel mapping relation of system broadcast information according to the related art.

FIG. 2 is a diagram of transmitting system information according to the related art.

FIG. 3 is a diagram of a method for transmitting channel state indication reference signal information according to an embodiment of the present invention.

FIG. 4 is a diagram of a MIB carrying related parameters of a channel state indication reference signal according to an embodiment of the present invention.

FIG. 5 is a diagram of a SIB carrying related parameters of a channel state indication reference signal according to an embodiment of the present invention.

Preferred Embodiments of the Present Invention

In the LTE system, the system information is an important source for the UE to acquire control information of a high layer at the network side, and is also important means for the network side to control/configure the UE.

From the point of view of transmitting the System Information (SI for short), the SI is divided into the following three parts:

$$\text{BCCH} \begin{cases} \text{MIB} \\ \text{SIB1} \\ \text{other SIBs (e.g.: SIB2、 SIB3 ……)} \end{cases}$$

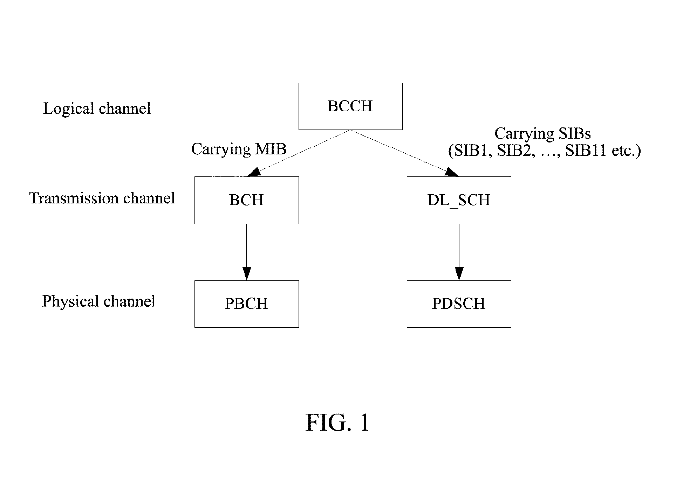

FIG. 1 is a diagram of a channel mapping relation of system broadcast information according to the related art. As shown in FIG. 1, in the process of transmitting the SI, the SI will be transmitted in a form of a SI message in a transmitting window thereof. Other SIBs except for a Master Information Block (MIB for short) and a System Information Block (SIB for short) 1 will be mapped to the SI for transmission, and the specific mapping relation from the SIB to the SI will be given on the SIB1. For the specific transmitting mode, the network side performs transmission according to the following appointment:

For the MIB, a fixed Quadrature Phase Shift Keying (QPSK for short) modulation mode is used for the 6 Resource Blocks (RBs for short) (72 sub-carriers), whose frequency domain is in the middle, at the first 4 Orthogonal Frequency Division Multiplexing (OFDM for short) symbols on slot1 of sub-frame #0 of each radio frame and on the middle 6. A transmission interval of the MIB is 10ms, and changes once every 40ms as one transmission cycle.

The SIB1 is transmitted fixedly on sub-frame #5 of even radio frames in the time domain, and is dynamically scheduled in the frequency domain. A transmission interval of the SIB1 is 20ms, and changes once every 80ms as one transmission cycle.

Other SIBs (such as SIB2, SIB3, ...) are mapped to corresponding SI, and are transmitted in units of SI messages at the network side, and the UE side receives the SI within corresponding SI windows (and obtains corresponding SIBs); and the other SIBs are in the corresponding SI windows in the time domain, and are dynamically scheduled in the frequency domain.

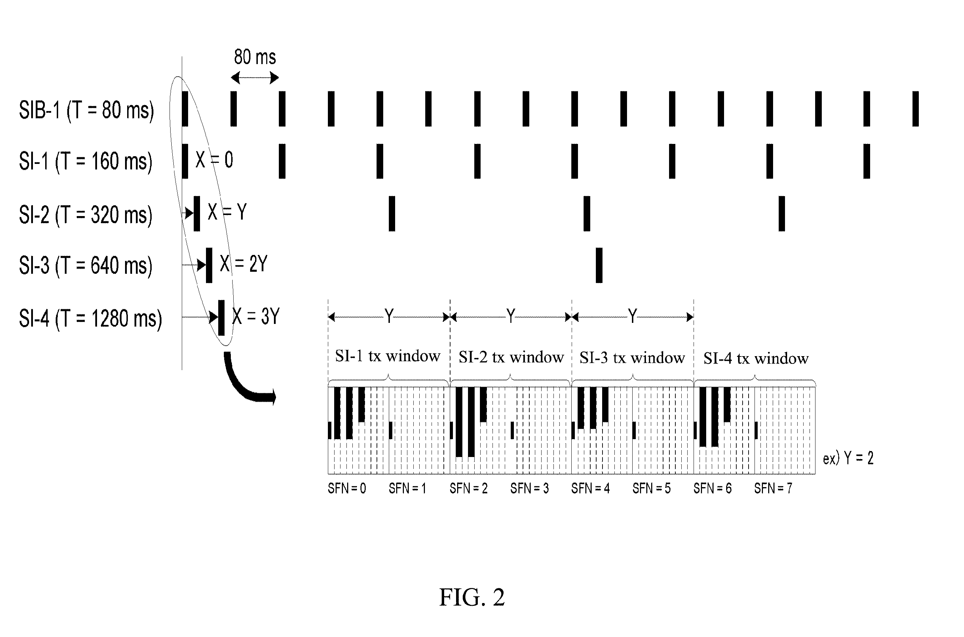

FIG. 2 is a diagram of transmitting SI according to the related art. As shown in FIG. 2, the UE will obtain SI from the network side in a form of MIB, SIB1 and SI, and uses the SI as an important source for control information of a high layer in the local cell. The SI is used as a Radio Resource Control (RRC for short) message, and will be parsed on a RRC sub-layer of the UE and control the function or implementation of the related sub-layer.

In order to solve the problem in the existing technologies, the basic idea of the present invention is that the network side notifies a terminal of the channel state indication reference signal information of other cells in a long-term coordinated set, for example information such as parameters of a transmission cycle of a channel state indication reference signal and/or a transmission location of the channel state indication reference signal of the other cells, and after receiving the channel state indication reference signal information, the terminal does not transmit data at corresponding locations where the channel state indication reference signal is transmitted by the other cells.

Wherein, the network side can carry the channel state indication reference signal information of the other cells in the long-term coordinated set in the SI of the cell.

By placing the control information which needs to be transmitted in a form of point to multi-point (i.e., being transmitted from the base station to multiple users) in SI of a high-layer signaling for transmission, the SI will be repeatedly and periodically transmitted in the cell, and the UE can read the system broadcast information of the cell when residing in the cell.

In addition, except for the SI, the above channel state indication reference signal information of the long-term coordinated set can also be carried in a Radio Resource Control message (RRC message for short) for transmission, or can also be carried in a Media Access Control Control Element (MAC CE for short) for transmission.

Based on the above idea, the present invention uses the following technical scheme:

a network side transmitting the channel state indication reference signal information of every other cell in a long-term coordinated set to a terminal,

wherein the channel state indication reference signal information includes at least a transmission cycle of a channel state indication reference signal as well as quantity of ports of the channel state indication reference signal of the every other cell in the long-term coordinated set.

Thus, the terminal can obtains the channel state indication reference signal information of every other cell in the long-term coordinated set from the network side, and does not transmit data at corresponding locations where the channel state indication reference signal is transmitted by the other cells.

Further, the network side can transmit the channel state indication reference signal information of every other cell in the long-term coordinated set in SI of the cell or a MAC CE or a RRC message.

Further, the channel state indication reference signal information may further comprise: a transmission location of the channel state indication reference signal and/or other cell IDs.

Further, the SI comprises: a MIB, a SIB1 or information of other SIBs.

Preferably, the channel state indication reference signal information is transmitted in the SI of the cell in a differential manner.

Preferably, the transmission cycle of the channel state indication reference signal occupies 1-4 bits of the SI.

Preferably, the quantity of ports of the channel state indication reference signal occupies 0-2 bits of the SI.

Preferably, the transmission location of the channel state indication reference signal occupies 0-6 bits of the SI.

In should be illustrated that, in the condition without conflict, the embodiments in the present application and the features in the embodiments can be combined with each other. The present invention will be described in detail with respect to accompanying drawings and in conjunction with embodiments hereinafter.

In the following embodiments, the steps illustrated in the flowchart of the accompanying drawings can be performed in a computer system with a set of computer executable instructions, and although a logical order is illustrated in the flowchart, in some cases, the steps illustrated and described can be performed in an order different from that here.

Embodiment one

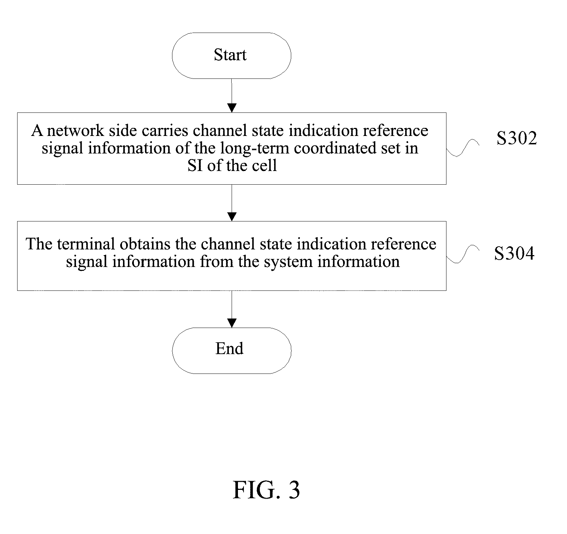

FIG. 3 illustrates a flowchart of a method for transmitting channel state indication reference signal information according to an embodiment of the present invention. As shown in FIG. 3, the method comprises the following steps S302 to S304.

In step S302, a network side carries channel state indication reference signal information in SI of the cell.

Wherein, the channel state indication reference signal information includes at least the following information of every other cell in the long-term coordinated set: a transmission cycle of a channel state indication reference signal as well as quantity of ports of the channel state indication reference signal.

The channel state indication reference signal information can further comprise transmission location information of the channel state indication reference signal, and the transmission location information of the channel state indication reference signal can be a location parameter or an offset.

In step S304, the terminal obtains the channel state indication reference signal information from the SI, and does not transmit data at the corresponding location where other cells transmit channel state indication reference signals.

Preferably, the channel state indication reference signal information can be carried in MIB of the SI, SIB1, SIB2, SIB3, SIB4, SIB5, SIB6, SIB7, SIB8, SIB9, SIB10, SIB11, SIB12, SIB13 and a new SIB. Wherein, when the parameters of the transmission cycle of the channel state indication reference signal and/or the offset of the channel state indication reference signal are transmitted on the SI, it does not influence the Rel8 user to read the SI.

Preferably, when the transmission cycle of the channel state indication reference signal is transmitted on the SI, the UE can be notified of the transmission cycle of the channel state indication reference signal using 1-4 bits; when the location parameter of the channel state indication reference signal is transmitted on the SI, the UE can be notified of the location parameter of the channel state indication reference signal by using 0-6 bits; and when the quantity of ports of the channel state indication reference signal are transmitted on the SI, the UE can be notified of the quantity of ports of the channel state indication reference signal by using 0-2 bits.

In the present embodiment, the point to multi-point control information is placed in the SI of the high-layer signaling for transmission; and the SI will be transmitted repeatedly and periodically in the cell, and for the UE, the premise of residing in the cell is reading the system broadcast information of the cell. Therefore, the UE can obtain the channel state indication reference signal information in the process of residing in the cell by transmitting the information on the SI. In addition, as the channel state indication reference signal information belongs to a semi-statistical configuration, it also conforms to features of semi-statistical configuration and slow variation of the SI.

In other embodiments of the present invention, the transmission cycle of the channel state indication reference signal, the quantity of ports of the channel state indication reference signal, the transmission location of the channel state indication reference signal and other cell IDs included in the channel state indication reference signal information can be carried by a RRC message or a MAC CE.

The implementation of the technical scheme according to the present invention will be described in detail in conjunction with a number of specific examples hereinafter.

Example one

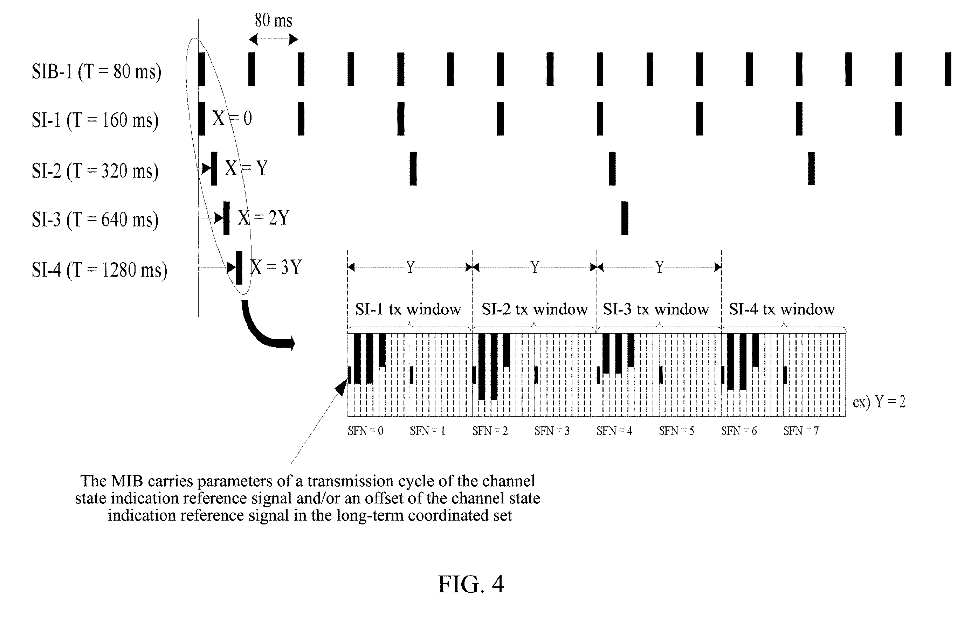

FIG. 4 is a diagram of a MIB carrying related parameters of a channel state indication reference signal of a long-term coordinated set according to an embodiment of the present invention. As shown in FIG. 4, the parameters of the transmission cycle of the channel state indication reference signal and the offset of the channel state indication reference signal can be carried on the MIB of the SI for transmission.

The SI will use 1 bit to indicate the transmission cycle of the channel state indication reference signal, and when the bit is "0", it is indicated that the channel state indication reference signal is transmitted in a cycle with 5ms, and when the bit is "1", it is indicated that the channel state indication reference signal is transmitted in a cycle with 10ms.

The SI will use 3 bits to indicate the location parameter of the channel state indication reference signal, as shown in table 1.

Table 1

| bits | transmission locations of the CSI-RS |
|------|--------------------------------------|
| 000 | Transmitted on sub-frame 9, and an offset of the CSI-RS at a sub-frame location of a certain symbol is 0 |
| 001 | Transmitted on sub-frame 8, and an offset of the CSI-RS at a sub-frame location of a certain symbol is 0 |
| 010 | Transmitted on sub-frame 7, and an offset of the CSI-RS at a sub-frame |

(continued)

| bits | transmission locations of the CSI-RS |
|---|---|
| | location of a certain symbol is 0 |
| 011 | Transmitted on sub-frame 6, and an offset of the CSI-RS at a sub-frame location of a certain symbol is 0 |
| 100 | Transmitted on sub-frame 5, and an offset of the CSI-RS at a sub-frame location of a certain symbol is 0 |

It should be illustrated that sub-frame 1 in the above table indicates a second sub-frame.

The quantity of ports of the channel state indication reference signal is transmitted on the SI of the cell, and the format thereof is shown in table 2:

Table 2

| bits | quantity of ports of the CSI-RS |
|---|---|
| 0 | CSI-RS with four paths |
| 1 | CSI-RS with eight paths |

Example two

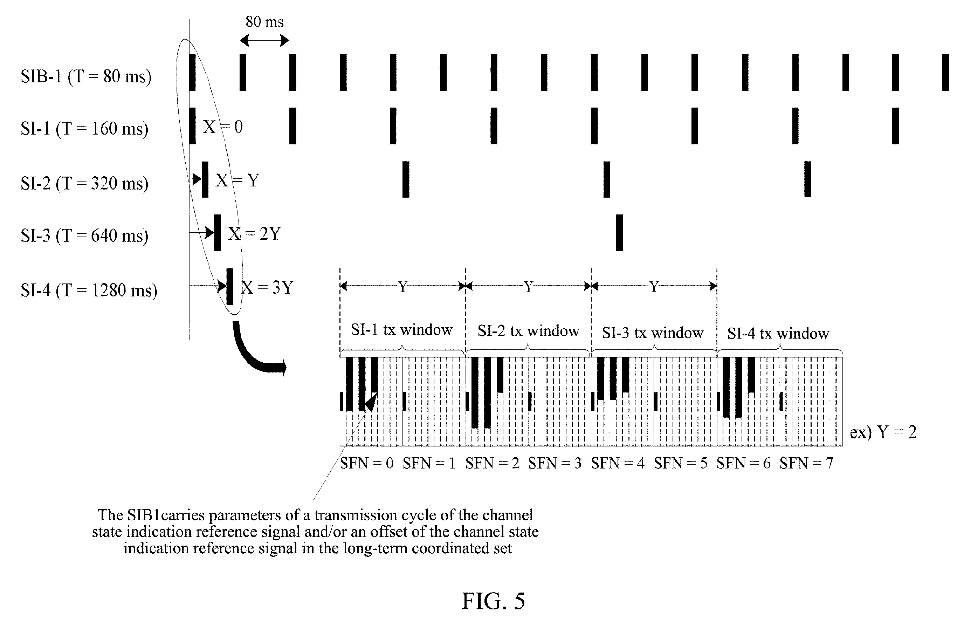

FIG. 5 is a diagram of a SIB carrying related parameters of a channel state indication reference signal of a long-term coordinated set according to an embodiment of the present invention. As shown in FIG. 5, the parameters of the transmission cycle of the channel state indication reference signal and/or the offset of the channel state indication reference signal can be carried on the SIB1 of the SI, or can also be expanded to other SIBs or a newly designed SIB for transmission.

The SI will use 2 bits to indicate the transmission cycle of the channel state indication reference signal, and when the bit is "00", it is indicated that the channel state indication reference signal is transmitted in a cycle with 5ms; when the bit is "01", it is indicated that the channel state indication reference signal is transmitted in a cycle with 10ms; when the bit is "10", it is indicated that the channel state indication reference signal is transmitted in a cycle with 15ms; and when the bit is "11", it is indicated that the channel state indication reference signal is transmitted in a cycle with 20ms.

The SI will use 6 bits to indicate the location parameter of the channel state indication reference signal, and the meaning represented by the specific bit information can be stipulated in accordance with the pattern design of the channel state indication reference signal, and will not be further described here.

Example three

The transmission cycle of the channel state indication reference signal of the long-term coordinated set can be carried on the MIB of the SI for transmission.

The SI will use 1 bit to indicate the transmission cycle of the channel state indication reference signal, and when the bit is "0", it is indicated that the channel state indication reference signal is transmitted in a cycle with 5ms, and when the bit is "1", it is indicated that the channel state indication reference signal is transmitted in a cycle with 10ms.

When there are six kinds of mapping patterns of the channel state indication reference signals orthogonal in one physical Resource Block (RB) within the long-term coordinated set, 3 bits are used to notify pattern information of various cells.

For antenna quantity of ports of channel state indication reference signals of various cells, they can also be notified in a differential manner. Assume that there are 4 antennas for cell 1, if the port number of the channel state indication reference signal of other cells are the same as 4, 1 is fed back, and if the port number is different from 4, 0 is fed back.

Example four

The parameter of the transmission cycle of the channel state indication reference signal of the long-term coordinated set can be carried on the SIB of the SI for transmission. The embodiment provides an embodiment of transmitting on the SIB1, and it can also be expanded to other SIBs or a newly designed SIB for transmission.

The SI will use 2 bits to indicate the transmission cycle of the channel state indication reference signal, and when the bit is "00", it is indicated that the channel state indication reference signal is transmitted in a cycle with 2ms, and when the bit is "01", it is indicated that the channel state indication reference signal is transmitted in a cycle with 5ms; when the bit is "10", it is indicated that the channel state indication reference signal is transmitted in a cycle with 10ms; and when the bit is "11", it is indicated that the channel state indication reference signal is transmitted in a cycle with 20ms.

Other cell IDs and/or the location parameter of the channel state indication reference signal in the long-term coordinated set are also transmitted on the SI of the cell.

Example five

The transmission cycle of the channel state indication reference signal in the long-term coordinated set can be carried on the RRC message for transmission, wherein, the RRC processes information of a third layer of a control plane between the UE and the UTRAN, and primarily comprises the following functions: broadcasting information provided by a non-access layer of the core network. The RRC is responsible for broadcasting the SI of the network to the UE, and associating the broadcasted information with the access layer; establishing, re-establishing, maintaining and releasing a RRC connection between the UE and the UTRAN; and allocating, re-configuring and releasing the radio resources of the RRC connection, and managing the mobility of the RRC connection.

The message of the radio resource control protocol will use 1 bit to indicate the transmission cycle of the channel state indication reference signal, and when the bit is "0", it is indicated that the channel state indication reference signal is transmitted in a cycle with 5ms, and when the bit is "1", it is indicated that the channel state indication reference signal is transmitted in a cycle with 10ms.

The RRC message in the embodiment can also be a system broadcast information (such as a PTM RRC message).

Example six

The transmission cycle of the channel state indication reference signal in the long-term coordinated set can be transmitted on the MAC CE.

The SI will use 1 bit to indicate the transmission cycle of the channel state indication reference signal, and when the bit is "0", it is indicated that the channel state indication reference signal is transmitted in a cycle with 5ms, and when the bit is "1", it is indicated that the channel state indication reference signal is transmitted in a cycle with 10ms.

The above description is only the preferred embodiments of the present invention and is not intended to limit the present invention. The invention can have a variety of changes and variations for those skilled in the art. Any modification, equivalent substitution, improvement etc. which are made within the spirit and principle of the present invention should belong to the protection scope of the present invention.

Industrial Applicability

With the technical scheme of the present invention, the problem of lacking implementation method for notifying the UE of related information of the channel state indication reference signal of other cells in the long-term coordinated set in the related technologies is solved, thus ensuring that all the terminals in the cell can receive the channel state indication reference signal in the long-term coordinated set, which meets the requirement of channel measurement of the coordinated multiple point transmission, and the reliability and extensiveness of the information communication is guaranteed with a less signaling overhead.

**Claims**

1. A method for transmitting channel state indication reference signal information, comprising:

   a network side transmitting the channel state indication reference signal information of every other cell in a long-term coordinated set to a terminal, wherein the channel state indication reference signal information includes at least a transmission cycle of a channel state indication reference signal as well as quantity of ports of the channel state indication reference signal of the every other cell in the long-term coordinated set.

2. The method according to claim 1, wherein, the network side transmits the channel state indication reference signal information to the terminal through system information of the cell or a Media Access Control Control Element (MAC CE) or a Radio Resource Control message (RRC message).

**3.** The method according to claim 2, wherein,
the channel state indication reference signal information further comprises: a transmission location of the channel state indication reference signal and/or a cell identification (ID) of every other cell in the long-term coordinated set.

**4.** The method according to claim 2 or 3, wherein,
the system information comprises: a Master Information Block (MIB), a System Information Block 1 (SIB1) or other SIBs.

**5.** The method according to claim 4, wherein,
the network side transmits the channel state indication reference signal information in the system information of the cell in a differential manner.

**6.** The method according to claim 4, wherein,
the transmission cycle of the channel state indication reference signal occupies 1-4 bits of the system information; the quantity of ports of the channel state indication reference signal occupies 0-2 bits of the system information; and the transmission location of the channel state indication reference signal occupies 0-6 bits of the system information.

**7.** An apparatus for transmitting channel state indication reference signal information, wherein, the apparatus is applied at a network side, and comprises: a channel state indication reference signal information transmitting unit; wherein, the channel state indication reference signal information transmitting unit is configured to transmit the channel state indication reference signal information of every other cell in a long-term coordinated set to a terminal, wherein the channel state indication reference signal information includes at least a transmission cycle of a channel state indication reference signal as well as quantity of ports of the channel state indication reference signal of the every other cell.

**8.** The transmitting apparatus according to claim 7, wherein,
the channel state indication reference signal information transmitting unit is configured to transmit the channel state indication reference signal information to the terminal through system information of the cell or a Media Access Control Control Element (MAC CE) or a Radio Resource Control message (RRC message).

**9.** The transmitting apparatus according to claim 8, wherein,
the channel state indication reference signal information transmitting unit is further configured to transmit the following channel state indication reference signal information: a transmission location of the channel state indication reference signal and/or a cell identification (ID) of every other cell in the long-term coordinated set.

**10.** The transmitting apparatus according to claim 8 or 9, wherein,
the channel state indication reference signal information transmitting unit is configured to transmit the channel state indication reference signal information in the system information of the cell in a differential manner; wherein, the system information of the cell comprises: a Master Information Block (MIB), a System Information Block 1 (SIB1) or other SIBs.

Logical channel

BCCH

Carrying MIB

Carrying SIBs
(SIB1, SIB2, …, SIB11 etc.)

Transmission channel

BCH

DL_SCH

Physical channel

PBCH

PDSCH

FIG. 1

FIG. 2

EP 2 538 739 A1

```
                        ┌─────────────┐
                        │    Start    │
                        └─────────────┘
                               │
                               ▼
┌───────────────────────────────────────────────────┐
│  A network side carries channel state indication   │        S302
│  reference signal information of the long-term      │
│  coordinated set in SI of the cell                  │
└───────────────────────────────────────────────────┘
                               │
                               ▼
┌───────────────────────────────────────────────────┐
│  The terminal obtains the channel state indication │        S304
│  reference signal information from the system       │
│  information                                        │
└───────────────────────────────────────────────────┘
                               │
                               ▼
                        ┌─────────────┐
                        │     End     │
                        └─────────────┘
```

FIG. 3

FIG. 4

SIB-1 (T = 80 ms)

SI-1 (T = 160 ms)    X = 0

SI-2 (T = 320 ms)    X = Y

SI-3 (T = 640 ms)    X = 2Y

SI-4 (T = 1280 ms)   X = 3Y

80 ms

| SI-1 tx window | SI-2 tx window | SI-3 tx window | SI-4 tx window |
| Y | Y | Y |

SFN = 0   SFN = 1   SFN = 2   SFN = 3   SFN = 4   SFN = 5   SFN = 6   SFN = 7

ex) Y = 2

The SIB1carries parameters of a transmission cycle of the channel state indication reference signal and/or an offset of the channel state indication reference signal in the long-term coordinated set

FIG. 5

# INTERNATIONAL SEARCH REPORT

| International application No. |
|---|
| PCT/CN2011/070335 |

## A. CLASSIFICATION OF SUBJECT MATTER

H04W72/04(2009.01)i

According to International Patent Classification (IPC) or to both national classification and IPC

## B. FIELDS SEARCHED

Minimum documentation searched (classification system followed by classification symbols)

IPC: H04B, H04Q, H04L, H04W

Documentation searched other than minimum documentation to the extent that such documents are included in the fields searched

Electronic data base consulted during the international search (name of data base and, where practicable, search terms used)

WPI, EPODOC,VEN, CNABS, CNTXT, CNKI: comp, coordinate+, lte, reference signal, cell, pilot, system information

## C. DOCUMENTS CONSIDERED TO BE RELEVANT

| Category* | Citation of document, with indication, where appropriate, of the relevant passages | Relevant to claim No. |
|---|---|---|
| X | CN101373999A (ZTE CORP) 25 Feb. 2009 (25.02.2009)<br><br>page 1 line 23 – page 3 line 19 of the description, claim 2 | 1-10 |
| A | CN101635950A (ZTE CORP) 27 Jan. 2010 (27.01.2010)<br><br>The whole document | 1-10 |
| PX | WO2010145348A1 (ZTE CORP) 23 Dec. 2010 (23.12.2010)<br><br>Claims 1-10 | 1-10 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 14 Apr. 2011 (14.04.2011) | **28 Apr. 2011 (28.04.2011)** |

| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br><br>FU,Haiwang<br><br>Telephone No. (86-10)62411393 |
|---|---|

Form PCT/ISA /210 (second sheet) (July 2009)

## INTERNATIONAL SEARCH REPORT
### Information on patent family members

| International application No. |
|---|
| PCT/CN2011/070335 |

| Patent Documents referred in the Report | Publication Date | Patent Family | Publication Date |
|---|---|---|---|
| CN101373999A | 25.02.2009 | None | |
| CN101635950A | 27.01.2010 | None | |
| WO2010145348A1 | 23.12.2010 | None | |

Form PCT/ISA /210 (patent family annex) (July 2009)